## Europäisches Patentamt
## European Patent Office
## Office européen des brevets

(19)

(11) Veröffentlichungsnummer: **0 310 853 B1**

(12) **EUROPÄISCHE PATENTSCHRIFT**

(45) Veröffentlichungstag der Patentschrift:
**13.11.91 Patentblatt 91/46**

(51) Int. Cl.⁵: **C08F 279/02, C08L 51/04, C08L 25/04, C08L 33/10**

(21) Anmeldenummer: **88115369.6**

(22) Anmeldetag: **20.09.88**

(54) **Pfropfkautschuke zur Modifizierung thermoplastischer Formmassen.**

(30) Priorität: **01.10.87 DE 3733134**

(43) Veröffentlichungstag der Anmeldung:
**12.04.89 Patentblatt 89/15**

(45) Bekanntmachung des Hinweises auf die
Patenterteilung:
**13.11.91 Patentblatt 91/46**

(84) Benannte Vertragsstaaten:
**DE FR GB IT**

(56) Entgegenhaltungen:
**EP-A- 0 265 900**
**US-A- 4 120 851**

(56) Entgegenhaltungen:
**CHEMICAL ABSTRACTS, Band 90, Nr. 4, 1977, Zusammenfassung Nr. 24105x, Columbus, Ohio, US; J.C. FALK et al.: "Weatherable high impact graft polyblends based on hydrogenated polydiene rubbers", & OPT. USE RESOUR., PRI CONF., PAPER NO. 9, 8 PP.. PLAST. RUBBER INST.**

(73) Patentinhaber: **BAYER AG**
**W-5090 Leverkusen 1 Bayerwerk (DE)**

(72) Erfinder: **Eichenauer, Herbert, Dr.**
**Gustav-Heinemann-Strasse 3**
**W-4047 Dormagen (DE)**
Erfinder: **Obrecht, Werner, Dr.**
**Holderberger Strasse 108**
**W-4130 Moers 2 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Durch Pfropfpolymerisation vinylgruppenhaltiger Monomerer auf ungesättigte Kautschuke (als Pfropfgrundlagen) hergestellte Pfropfpolymerisate sind bekannt, z.B. Pfropfprodukte von Styrol auf Polybutadien (schlagzähes Polystyrol, HIPS) oder von Styrol/Acrylnitril-Gemischen auf Polybutadien (ABS-Polymerisate).

Ebenso bekannt sind Pfropfprodukte auf gesättigte Kautschuke (als Pfropfgrundlagen), z.B. Pfropfprodukte von Styrol/Acrylnitril-Gemischen auf Polybutylacrylat-Kautschuk (ASA-Polymerisate) oder auf EPM- oder EPDM-Kautschuk (AES-Polymerisate).

Aus der älteren EP-A-0265900 sind härtbare Formmassen bekannt, die als Bestandteil Copolymerisate aus vinylgruppenhaltigen Monomeren und einem partiell hydrierten Nitrilkautschuk enthalten.

In der OPT. USE RESOUR., PRI CONF., PAPER No. 9,8 PP. PLAST. RUBBER INST. Sind Pfropfprodukte, erhältlich durch Polymerisation von Styrol, Acrylnitril in Gegenwart von hydriertem Kautschuk, beschrieben.

In der US-A-4120851 sind Pfropfprodukte erwähnt, die durch Polymerisation von Vinylgrüppenhaltigen Monomeren in Gegenwart von Nitrilkautschuk erhalten werden.

Nachteile der Pfropfprodukte auf Dienbasis sind geringe Witterungs- und Lichtalterungsbeständigkeit infolge des Gehaltes an Doppelbindungen. Die Pfropfprodukte auf gesättigte Kautschuke ergeben in Abmischung mit thermoplastischen Harzen Unverträglichkeiten und damit einhergehende unerwünschte Oberflächeneffekte.

Gegenstand der Erfindung sind Pfropfprodukte erhältlich durch radikalische Polymerisation eines vinylgruppenhaltigen Monomeren oder mehrerer solcher Monomerer in Gegenwart eines hydrierten Nitrilkautschuks.

Es wurde auch gefunden, daß solche Pfropfprodukte von Vinylmonomeren auf hydrierten Nitrilkautschuk zur Modifizierung thermoplastischer Formmassen eingesetzt werden können, wobei Formteile mit guter Zähigkeit, guter Oberflächenbeschaffenheit und ausgezeichneter thermoplastischer Verarbeitbarkeit erhalten werden.

Zur Herstellung der Pfropfprodukte geeignete hydrierte Nitrilkautschuke weisen einen Nitrilgruppengehalt von 7 bis 27 Gew.-%, vorzugsweise von 20 bis 27 Gew.-% oder von 7 bis 18 Gew.-% auf ; sie enthalten 0.3 bis 40 C-C-Doppelbindungen pro 1.000 C-Atome, bevorzugt 0.3 bis 6 C-C-Doppelbindungen pro 1.000 C-Atome.

Als Pfropfmonomere werden vinylgruppenhaltige Monomere mit 1 bis 3 polymerisierbaren Doppelbindungen oder Gemische solcher Monomerer eingesetzt. Vorzugsweise verwendet man Verbindungen mit einer Vinylgruppe, z.B. Styrol, $C_1$-$C_4$-alkylsubstituierte Styrole, halogensubstituierte Styrole, $\alpha$-Methylstyrol, (Meth)Acrylnitril, Ester der (Meth)Acrylsäure mit $C_1$-$C_8$-aliphatischen oder cycloaliphatischen Alkoholen, Glycidyl(meth)acrylat, (Meth)Acrylsäure, Itaconsäure, Mono- und Bisester von Malein- und Fumarsäure, Inden. Besonders bevorzugt sind Styrol, Methylmethacrylat und Gemische aus Styrol und Acrylnitril bzw. aus $\alpha$-Methylstyrol und Acrylnitril.

Die erfindungsgemäßen Pfropfprodukte enthalten 5 bis 95 Gew.-%, insbesondere 20 bis 90 Gew.-%, Kautschuk und 95 bis 5 Gew.-%, insbesondere 80 bis 10 Gew.-%, pfropfpolymerisierte Monomere.

Die Kautschuke liegen in diesen Pfropfcopolymerisaten in Form wenigstens partiell vernetzter Teilchen eines mittleren Teilchendurchmessers ($d_{50}$) von 0,05 bis 2,5 μm, vorzugsweise von 0,1 bis 0,8 μm, vor.

Die Pfropfprodukte können mit allen bekannten Techniken wie Masse-, Lösungs-, Suspensions- oder Emulsionspolymerisation hergestellt werden, auch mit mehrstufigen Verfahren, z.B. einer Kombination von Masse- und Suspensionspolymerisation. Bevorzugt angewendet wird die Emulsionspolymerisation, bei der ein Kautschuk als Latex vorgelegt und in seiner Gegenwart die Monomeren polymerisiert werden. Mit dieser Technik wird die Bildung sehr grober Pfropfkautschukteilchen, die die Oberflächenqualität verschlechtern, weitgehend oder vollständig zurückgedrängt.

Die Pfropfprodukte bilden sich nach einem radikalischen Mechanismus, der bevorzugt mit Hilfe radikalbildender Aktivatoren initiiert wird. Als solche kommen übliche organische und anorganische Peroxide, anorganische Persulfate, Azo-Initiatoren, sowie Redox-Systeme in Betracht, wobei letztere aus einem Oxidationsmittel, vorzugsweise Peroxid(e), und einem Reduktionsmittel bestehen und zusätzlich Schwermetallionen im Reduktionsmedium zugegen sind. Beispiele für geeignete radikalbildende Verbindungen sind Azobisisobutyronitril, Kaliumpersulfat oder das System Benzoylperoxid/Eisen (II) sulfat/Natriumformaldehydsulfoxylat.

Die Pfropfreaktion wird bei Temperaturen zwischen 30°C und 100°C, vorzugsweise zwischen 50°C und 80°C, durchgeführt. Als bevorzugter Initiator wird Kaliumpersulfat eingesetzt.

Bei der bevorzugten Emulsionspfropfpolymerisation werden übliche Emulgatoren, z.B. Alkylsulfate, Aralkylsulfonate, Alkalisalze gesättigter und ungesättigter Fettsäuren, sowie Alkalisalze disproportionierter oder hydrierter Harzsäuren wie Abietin- oder Tallölsäuren verwendet und in der Regel anorganische Peroxoverbindungen oder Redox-Systeme als Initiatoren.

Wird bei diesen Verfahren nicht bis zum vollständigem Umsatz polymerisiert, so können die nicht umgesetzten Monomeren bzw. Lösemittel in bekannter Weise, z.B. durch Schneckeneindampfung, Dünnschichtverdampfung, entfernt werden.

Bei der Lösungs-, Masse- und Suspensionspolymerisation fallen die Pfropfprodukte nach Entfernung flüchtiger Bestandteile direkt als Feststoffe an und können so weiterverarbeitet werden. Emulsionspolymerisate können z.B. mit Salzen und/oder Säuren ausgefällt, gewaschen und getrocknet werden. Es ist auch möglich, Pfropfprodukte und — soweit verfügbar — thermoplastische Matrix als Latices zu vermischen und gemeinsam auszufällen.

Zur Herstellung der bei der Pfropfreaktion eingesetzten Latices hydrierter Nitrilkautschuke werden die nach bekannten Verfahren (siehe z.B. DE-OS 2539132, DE-OS 3329974, DE-OS 3046008, DE-OS 3046251, EP-A-111412) hergestellten hydrierten Nitrilkautschuke zunächst in einem organischen Lösungsmittel gelöst. Dieses Lösungsmittel (es kann auch ein Gemisch sein), muß entweder in Wasser wenig löslich sein und ein Azeotrop mit über 50 Gew.-% Lösungsmittel bilden oder einen Siedepunkt unterhalb 95°C besitzen. Die Lösung des hydrierten Nitrilkautschuks wird nach bekannten Verfahren unter Verwendung von anionischen, kationischen oder nichtionischen Emulgatoren oder Methylcellulose emulgiert und danach das organische Lösungsmittel z.B. durch Erhitzen entfernt.

Zur Herstellung der Emulsionen geeignete organische Lösungsmittel sind beispielsweise 3-Chlortoluol, Diisobutylketon, Methylisobutylketon, Methylisopropylketon oder deren Gemische.

Die erfindungsgemäßen Pfropfprodukte können als Modifikatoren zur Erhöhung der Zähigkeit thermoplastischer Formmassen dienen, die bereits Gemische verschiedener Kunststoffe sein können. Beispiele für modifizierbare thermoplastische Formmassen sind :

a) Homopolymerisate von Styrol und alkylsubstituiertem Styrol sowie deren Mischpolymerisate mit vinylgruppenhaltigen Monomeren, z.B. Polystyrol, Poly (p-methyl)-styrol, Poly (styrol-co-acrylnitril), Poly ($\alpha$-methylstyrol-co-acrylnitril), Poly (styrol-co-maleinsäureanhydrid), Poly (styrol-co-acrylnitril-co-maleinsäure-N-phenylimid), Poly (styrol-co-maleinsäure-N-phenylimid),

b) Homopolymerisate von $C_1$-$C_4$-Alkylacrylaten und -methacrylaten sowie deren Copolymerisate mit vinylgruppenhaltigen Monomeren, z.B. Polymethylmethacrylat, Poly(methylmethacrylat-co-acrylnitril),

c) halogenhaltige Polymerisate, z.B. Polyvinylchlorid, Polyvinylidenchlorid, chloriertes Polyethylen,

d) Polycarbonate, z.B. auf Basis von Bisphenol A, Tetramethylbisphenol A, Tetrabrombisphenol A,

e) Polyester, z.B. auf Basis Terephthalsäure, Isophthalsäure, Ethylenglykol, Butandiol,

f) Polyamide, z.B. auf Basis von $\varepsilon$-Caprolactam, Laurinlactam, Adipinsäure/Hexamethylendiamin.

Besonders günstige Ergebnisse erhält man in Formmassen gemäß a) und b), insbesondere in Styrol-Acrylnitril-Copolymerisaten. Verwendet man in diesem Fall Pfropfprodukte, die Styrol und Acrylnitril gepfropft enthalten, so entstehen Massen mit hoher Zähigkeit, guter Oberflächenbeschaffenheit und ausgezeichneter thermoplastischer Verarbeitbarkeit. Die bevorzugte Zusammensetzung derartiger Formmassen besteht aus A) 20 bis 80 Gew.-% der erfindungsgemäßen Pfropfprodukte und B) 80 bis 20 Gew.-% eines thermoplastischen Polymerisats aus 95 bis 50 Gew.-Teilen Styrol, $\alpha$-Methylstyrol, kernsubstituiertem Styrol, Methylmethacrylat oder Mischungen daraus und 5 bis 50 Gew.-Teilen (Meth)Acrylnitril, Methylmethacrylat, Maleinsäureanhydrid, N-substituiertem Maleinimid oder Mischungen daraus.

Für die Modifizierung von Formmassen verwendet man die erfindungsgemäßen Pfropfprodukte in Mengen von 1 bis 80, vorzugsweise 5 bis 50, Gew.-%, bezogen auf die gesamte Formmasse. Zu ihrer Herstellung kann man übliche Mischvorrichtungen wie Walzenstühle, Mischextruder, Innenkneter verwenden. Beim Vermischen oder an anderen Stellen der Aufarbeitung, Weiterverarbeitung und Endformung können der Formmasse erforderliche oder für das Einsatzgebiet zweckmäßige Additive zugesetzt werden, z.B. Antioxidantien, Antistatika, Gleitmittel, Flammschutzmittel, Füll- und Verstärkerstoffe, Farbmittel.

Die modifizierten Formmassen können auf üblichen Verarbeitungsmaschinen thermoplastisch verformt werden, z.B. durch Spritzguß, Plattenextrusion mit anschließender Warmverformung oder Extrusion (für Rohre und Profile).

In den folgenden Beispielen sind Teile immer Gewichtsteile und Prozente immer Gew.-%, wenn nicht anders angegeben.

Beispiel

Eingesetzte Polymerisate :

A. Erfindungsgemäßes Pfropfprodukt auf Basis eines hydrierten Nitrilkautschuks)

50 Teile (gerechnet als Feststoff) eines in Emulsionsform vorliegende.. nydrierten Nitrilkautschuks mit einer mittleren Teilchengröße ($d_{50}$) von 0,15 μm wurde auf 65°C erwärmt und mit 0,3 Teilen $K_2S_2O_8$ versetzt. Danach wurden 50 Teile eines Gemisches aus Styrol und Acrylnitril (72 : 28) sowie 2 Teile (gerechnet als Festsubstanz) einer 10%igen wäßrigen Lösung der Natriumsalze eines $C_9$-$C_{18}$-Alkylsulfonsäuregemisches über 4 Stunden zudosiert. Nach einer 4-stündigen Nachreaktionszeit bei 65°C wurde der Pfropflatex nach Zugabe von ca. 1,0 Teilen eines phenolischen Antioxidans mit einer wäßrigen Magnesiumsulfat/Essigsäure-Lösung koaguliert und nach dem Waschen das resultierende Pulver bei 70°C im Vakuum getrocknet. Aus dem erhaltenen Pulver hergestellte Preßplatten zeigten nach Schnellbelichtung (72h) im SUN-Test-Gerät der Fa. Hanau keine Veränderung.

Der hydrierte Nitrilkautschuk wird wie folgt hergestellt.

1.) Lösen eines hydrierten Nitrilkautschuks mit einem Nitrilgruppengehalt von 17 Gew.-%, einer Mooney-Viskosität (ML 1-4/100°C) von 29 und einem Restdoppelbindungsgehalt von 7,5 Doppelbindungen pro 1.000 Kohlenstoffatome in Chlorbenzol bei 50°C unter Ausbildung einer 8%igen Lösung,

2. Verrühren dieser Lösung mit einer Lösung von 10 Teilen Aerosol OT 100® (Natriumsalz der Dioctylsulfobernsteinsäure, American Cyanamid) und 5 Teilen Natrosol 25 OHR® (carboxylierte Methylcellulose, Hercules GB) in entmineralisiertem Wasser unter Verwendung eines schnellaufenden Rührwerks (10.000 U/min) innerhalb von 5 Minuten Mischzeit,

3. Entfernung des Lösungsmittels in einem Rotationsverdampfer unter erniedrigtem Druck (0.02 bar), wobei das azeotrop abdestillierte Wasser teilweise ersetzt wurde, so daß die entstandene Emulsion einen Feststoffgehalt von 10,3 Gew.-% hatte)

B) Pfropfprodukt auf Basis eines Nitrilkautschuks (Vergleich)

50 Teile (gerechnet als Feststoff) eines statistischen Acrylnitril/Butadien-Copolymerisats mit einem Acrylnitrilgehalt von 34,9 Gew.-% und einer Mooney-Viskosität ML 1 + 4/100°C = 29 in Form einer Emulsion mit einem Feststoffgehalt von 21,8 Gew.-% und einer mittleren Teilchengröße ($d_{50}$) von 0,15 μm wurden auf 65°C erwärmt und mit 0,5 Teilen $K_2S_2O_8$ versetzt. Danach wurden 50 Teile eines Gemisches aus Styrol und Acrylnitril (72 : 28) sowie 2 Teile (gerechnet als Festsubstanz) einer 10%igen wäßrigen Lösung der Natriumsalze eines $C_9$-$C_{18}$-Alkylsulfonsäuregemisches über 4 Stunden zudosiert. Nach einer 4-stündigen Nachreaktionszeit bei 65°C wurde wie bei Polymerisat A beschrieben aufgearbeitet. Aus dem Pulver hergestellte Preßplatten zeigten nach 72 stündiger Belichtung (SUN-Test-Gerät) eine starke Verfärbung.

C) Pfropfprodukte auf Basis eines Polybutadienkautschuks (Vergleich)

Die Pfropfpolymerisation wurde wie unter A) und B) beschrieben in Emulsion durchgeführt, wobei ein Pfropfkautschuk mit einem Polybutadiengehalt von 50 Gew.-% und einem Gehalt an pfropfpolymerisiertem Styrol/Acrylnitril-Copolymerisat (Gew.-Verhältnis 72 : 28) von 50 Gew.-% resultierte. Der mittlere Teilchendurchmesser ($d_{50}$) des eingesetzten Polybutadienlatex betrug 0,15 μm. Aus dem Pfropfpolymerpulver hergestellte Preßplatten zeigten nach 72 stündiger Belichtung (SUN-Test-Gerät) eine deutliche Verfärbung.

D) Styrol/Acrylnitril-Copolymerisat als Mischungskomponente

Gewichtsverhältnis Styrol : Acrylnitril = 72 : 28 ; mittleres Molekulargewicht (Gewichtsmittel) $\overline{M}_w$ von ca. 115.000 ; molukulare Uneinheitlichkeit

$$U = \frac{M_w}{M_n} - 1 \leqq 2,0$$

($\overline{M}_w$ = Gewichtsmittel des Molekulargewichts, $\overline{M}_n$ = Zahlenmittel des Molekulargewichts).

Die erfindungsgemäßen Formmassen und die Vergleichsformmassen wurden nach Zusatz von 2 Gew.-Teilen Pentaerythrittetrastearat und 0,1 Gew.-Teilen eines Silikonöls (jeweils pro 100 gew.-Teile Polymer) durch Schmelzcompoundierung in einem Innenkneter hergestellt.

Anschließend wurden die Formmassen zu Normkleinstäben und einer Platte (zur Oberflächenbeurteilung) verspritzt. Die Kerbschlagzähigkeit wurde bei Zimmertemperatur ($a_kRT$) und bei −40°C ($a_k$ −40°C) nach DIN 53453 (Einheit : kJ/m²), die Kugeldruckhärte ($H_c$) nach DIN 53456 (Einheit : N/mm²) und die Fließfähigkeit durch Messung des Volumen-Fließindex MVI nach DIN 53735 U (Einheit : cm³/10 min) bestimmt.

Die Zusammensetzungen der Formmassen sowie die Prüfdaten sind in Tabelle 1 zusammengestellt.

Demnach zeichnen sich Formmassen auf Basis der erfindungsgemäßen Pfropfprodukte durch eine Kombination aus guter Zähigkeit, hoher Schmelzfließfähigkeit und guter Oberflächenqualität aus.

EP 0 310 853 B1

Tabelle 1  Zusammensetzungen und Prüfdaten der Formmassen

| Formmasse | A (Gew.-Teile) | B (Gew.-Teile) | C (Gew.-Teile) | D (Gew.-Teile) | RT $a_k$ | -40 $a_k$ | $H_c$ | MVI-Wert | Ober-fläche |
|---|---|---|---|---|---|---|---|---|---|
| 1 | 20 | - | - | 80 | 4,1 | 1,6 | 132 | 15,0 | glänzend |
| 2 (Vergleich) | - | 20 | - | 80 | 1,6 | 1,1 | 123 | 6,5 | matt |
| 3 (Vergleich) | - | - | 20 | 80 | 2,7 | 2,1 | 132 | 8,9 | glänzend |
| 4 | 30 | - | - | 70 | 6,7 | 1,8 | 109 | 9,7 | glänzend |
| 5 (Vergleich) | - | 30 | - | 70 | 1,4 | 1,1 | 101 | 3,1 | matt |
| 6 (Vergleich) | - | - | 30 | 70 | 4,0 | 3,3 | 115 | 6,3 | glänzend |
| 7 | 40 | - | - | 60 | 10,1 | 2,2 | 86 | 6,1 | glänzend |
| 8 (Vergleich) | - | 40 | - | 60 | 1,8 | 1,1 | 82 | 1,2 | matt |
| 9 (Vergleich) | - | - | 40 | 60 | 6,5 | 5,1 | 98 | 4,1 | glänzend |

## Patentansprüche

1. Pfropfprodukt erhältlich durch radikalische Polymerisation eines vinylgruppenhaltigen Monomeren oder mehrerer solcher Monomerer in Gegenwart eines hydrieten Nitrilkautschuks, der 7 bis 27 Gew.-% Nitrilgruppen und 0,3 bis 40 C-C-Doppelbindungen pro 1.000 C-Atome enthält.

2. Verwendung von Pfropfprodukten gemäß Anspruch 1 in Mengen von 1 bis 80 Gew.-% (bezogen auf fertige Mischung) als Bestandteil kautschukmodifizierter thermoplastischer Formmassen.

3. Mischungen bestehend aus A) 20 bis 80 Gew.-% eines Propfproduktes gemäß Anspruch 1 und B) 80 bis 20 Gew.-% eines thermoplastischen Polymerisats aus 95 bis 50 Gew.-Teilen Styrol, α-Methylstyrol, kernsubstituiertem Styrol, Methylmethacrylat oder Mischungen daraus und 5 bis 50 Gew.-Teilen (Meth)Acrylnitril, Methylmethacrylat, Maleinsäureanhydrid, N-substituiertem Maleinimid oder Mischungen daraus.

## Claims

1. A graft product obtainable by radical polymerization of one or more monomers containing vinyl groups in the presence of a hydrogenated nitrile rubber which contains 7 to 27% by weight nitrile groups and 0.3 to 40 C-C double bonds per 1,000 carbon atoms.

2. The use of the graft products claimed in claim 1 in quantities of 1 to 80% by weight (based on the final mixture) as a constituent of rubber-modified thermoplastic moulding compounds.

3. Mixtures consisting of A) 20 to 80% by weight of the graft product claimed in claim 1 and B) 80 to 20% by weight of a thermoplastic polymer of 95 to 50 parts by weight styrene, α-methyl styrene, nucleus-substituted styrene, methyl methacrylate or mixtures thereof and 5 to 50 parts by weight (meth)acrylonitrile, methyl methacrylate, maleic anhydride, N-substituted maleic imide or mixtures thereof.

## Revendications

1. Produit de greffage obtenu par polymérisation radicalaire d'un monomère à groupes vinyle ou de plusieurs monomères de ce type en présence d'un caoutchouc nitrile hydrogéné, qui contient de 7 à 27% en poids de groupes nitrile et de 0,3 à 40 doubles liaisons C-C pour 1000 atomes de carbone.

2. Utilisation des produits de greffage selon la revendication 1, en quantités de 1 à 80% en poids (sur le mélange fini) en tant que constituants de matières à mouler thermoplastiques modifiées par des caoutchoucs.

3. Mélanges consistant en A) 20 à 80% en poids d'un produit de greffage selon la revendication 1 et B) 80 à 20% en poids d'un polymère thermoplastique de 95 à 50 parties en poids de styrène, d'α-méthylstyrène, d'un styrène substitué dans le noyau, de méthacrylate de méthyle ou d'un mélange de ces monomères et 5 à 50 parties en poids de (méth)acrylonitrile, de méthacrylate de méthyle, d'anhydride maléique, d'un maléimide N-substitué ou d'un mélange de ces monomères.